# EUROPEAN PATENT SPECIFICATION

(11) **EP 3 311 057 B1**
(45) Date of publication and mention of the grant of the patent: **15.05.2019**
(21) Application number: 16751362.1
(22) Date of filing: 09.06.2016
(51) Int. Cl.: F16L 23/04, F16L 55/10, B63B 27/24

(54) **SAFETY COUPLING DEVICE PROVIDED WITH SHUT-OFF VALVES FOR COUPLING TWO FLUID CONDUIT PARTS**
SICHERHEITSKUPPLUNGSVORRICHTUNG MIT ABSPERRVENTILEN ZUM KOPPELN ZWEIER FLUIDLEITUNGSTEILE
DISPOSITIF DE RACCORD DE SÉCURITÉ ÉQUIPÉ DE SOUPAPES D'ARRÊT POUR UN RACCORD DE DEUX PARTIES DE CONDUITE DE FLUIDE

(30) Priority: 18.06.2015 NL 2014991
(43) Date of publication of application: 25.04.2018
(73) Proprietor: Kanon Loading Equipment B.v., 3899 AZ Zeewolde (NL)
(72) Inventor: BOONEN, Gerrit Aalt, 3849 RN Hierden (NL); JANSSEN, Albert, 7312 DW Apeldoorn (NL); VERKERK, Nico, 3893 DL Zeewolde (NL)
(74) Representative: Dokter, Hendrik Daniel
(86) International application number: PCT/NL2016/050412
(87) International publication number: WO 2016/204607

(56) References cited:
- WO-A2-2009/071591
- DE-A1-102012 103 061
- DE-C1- 4 430 132
- US-A1- 2004 070 206

## Description

The invention relates to a safety coupling device provided with shut-off valves for coupling two fluid conduit parts, comprising a pair of co-acting coupling bodies connectable to the respective conduit parts and provided with a first flange, and coupling means for releasable coupling of the coupling bodies.

Known from DE 44 30 132 C1 is a coupling device, the coupling bodies of which are each provided with a shut-off valve, wherein the respective shut-off valves co-act such that in coupled state of the coupling bodies they are opened for passage of a fluid through the conduit parts, and in uncoupled state of the coupling bodies they close the fluid conduit parts. This coupling device is for instance intended for use as safety coupling in coupled conduit parts of a fuel line from a tanker truck to a fuel filling station, wherein it is required that line breakage takes place in the safety coupling as a result of unintentional pulling on the line, and the conduit parts are closed directly without leakage of fluid.

In the known safety coupling device the coupling means are provided by shear bolts.

Inherent to the operation of a safety coupling device with shear bolts is that it is reactive, i.e. the co-acting coupling bodies are only released from each other when a substantial force large enough to cause the shear bolts to break is exerted in axial direction of the conduit parts. Proactive intervention, i.e. uncoupling of the coupling bodies in response to a control signal, is not possible in the known coupling device.

There is moreover the risk in the known coupling device that, when forces also occur in a lateral direction relative to the axial direction, the shear bolts do not break immediately and/or simultaneously, or the coupling bodies are not separated from each other in axial direction of each other, which can result in a closure of the shut-off valves which is incomplete or too late, and so in outflow of fluid.

WO 2009/071591 A2 discloses a connector for releasably attaching two hydrocarbon ducts, the connector comprising first and second connector members, each connector member having a housing with a fluid passage, a valve rotatably seated in the passage for closing off the fluid passage, drive members attached to a respective valve situated at an outer surface of the housing for rotation of the valves between an open state and a closed state, each drive member comprising a displacement device movable in an axial direction of the housing and a first and second force element coupled to a respective displacement device, wherein in the coupled state of the connector members, the displacement device of the second drive member engages with the displacement device of the first drive member to place the first and second drive members in an axial opening position in which the valves are opened and the force elements are in a compressed state, and wherein upon axial retraction of the second displacement device away from the first connector member, the first and second displacement devices are movable by expansion of the force elements to an axial closure position in which the valves are closed. The connector comprises a sleeve that fits around the housing of the connector member, which sleeve is connected via calibrated shear bolts.

It is an object of the invention to provide a safety coupling device for coupling two fluid conduit parts which are particularly suitable for application in a fluid conduit of relatively large diameter, for instance a line between a ship and a quayside or a line between two ships.

With this safety coupling device it must be possible to release coupled coupling bodies when a substantial force occurs in axial direction, and to immediately close the conduit parts coupled to these coupling bodies without leakage of fluid occurring.

Proactive operation of the safety coupling device must also be possible in a manner such that the co-acting coupled coupling bodies can be released in axial direction even without forces occurring.

These objects are achieved, and other advantages gained, with a safety coupling device of the type stated in the preamble, wherein according to the invention the coupling means are provided by a clamping member assembled from two clamping parts which is to be arranged releasably round the first flanges of the respective coupling bodies, wherein the clamping parts are each coupled pivotally at a first outer end by a hinge to a support body and are provided with lever arms extending from the respective hinge and mutually coupled by drive means, and are provided at a second outer end with locking means for locking the coupling means in a situation in which the clamping member is arranged round the first flanges, and actuator means are provided for releasing the clamping member from the situation in which it is arranged round the first flanges.

In order to release the coupling bodies from each other in such a coupling device the locking means are released by the actuator means and the lever arms are driven by the drive means, whereby the clamping parts move apart and the first flanges enclosed by the clamping member are left clear, this without the possibility of damage to the coupling body or outflow of fluid from the conduit parts.

In an embodiment the drive means are provided by a pair of compression springs received in spring cylinders and cylinder rods extending therefrom, and the locking means comprise a pair of protrusions extending from the respective second outer ends and a U-shaped body to be arranged round these protrusions which is displaceable in axial direction of the conduit parts.

In this embodiment the legs of the U-shaped body clamp round the two protrusions in coupled state of the coupling bodies and, after the U-shaped body has been displaced, the protrusions are no longer clamped, as a result of which the lever arms, and thereby the clamping parts, are pressed apart by being driven by the compression springs, wherein the first flanges move clear of the clamping parts.

The actuator means can comprise any suitable actuator for displacing the U-shaped body.

In a practical advantageous embodiment the actuator means comprise a hydraulic cylinder for displacing the U-shaped body.

The hydraulic cylinder is for instance controlled by a control system with magnetic valves in the fluid lines for the hydraulic cylinder.

A hydraulic cylinder provides the advantage that it can also be applied in cryogenic fluid conduits, for instance conduits for liquefied natural gas (LNG), and that a control system with magnetic valves in the hydraulic lines for the cylinder is reliable and simple to operate.

For convenience of operation the clamping parts in a safety coupling device according to the invention are provided for instance at their respective second outer end with a holder for an operating arm for the clamping parts.

In order to enable rapid coupling of a safety coupling device to the respective conduit parts, the coupling bodies are each provided in another exemplary embodiment with a second flange for coupling the respective coupling body to a flange of a fluid conduit part.

The shut-off valves in a safety coupling device according to the invention are for instance provided by a pair of ball valves or a pair of butterfly valves.

In an advantageous embodiment the shut-off valves comprise a pair of disc valves enclosed under pre-pressure of a compression spring and provided on their side remote from the compression spring with an actuator pin, wherein in coupled state of the coupling bodies the respective actuator pins butt against each other and the disc valves are pressed away by the respective actuator pins counter to the pre-pressure of the respective compression springs in order to provide a flow opening through the coupling member, and in uncoupled state of the coupling bodies the disc valves are pressed by the respective compression springs onto a valve seat in order to close the respective coupling bodies.

This embodiment provides the advantage of being relatively light in weight and so suitable for coupling to flexible conduit parts at relatively great height.

The safety coupling device is preferably provided with measuring and control means for measuring the mutual distance between two predetermined points on respective coupled fluid conduit parts and for controlling the actuator means subject to this distance.

Using these measuring and control means it is possible to uncouple coupled conduit parts when the need arises even before a physical force is exerted on these conduit parts.

The measuring and control means for measuring the mutual distance comprise for instance a breaking cable suspended between the two points and a detector for detecting breaking of this breaking cable.

The invention will be elucidated hereinbelow on the basis of an exemplary embodiment and with reference to the drawings.

In the drawings
Fig. 1 is a perspective view of an embodiment of a safety coupling device according to the invention in coupled state as seen from the front,
Fig. 2 is a perspective view of the safety coupling device shown in fig. 1 in coupled state as seen from the rear;
Fig. 3 is a perspective view of the safety coupling device shown in fig. 1 in uncoupled state as seen from the rear; and
Fig. 4 is a perspective view of the safety coupling device shown in fig. 1 in uncoupled state as seen from the front.

Corresponding components are designated in the figures with the same reference numerals.

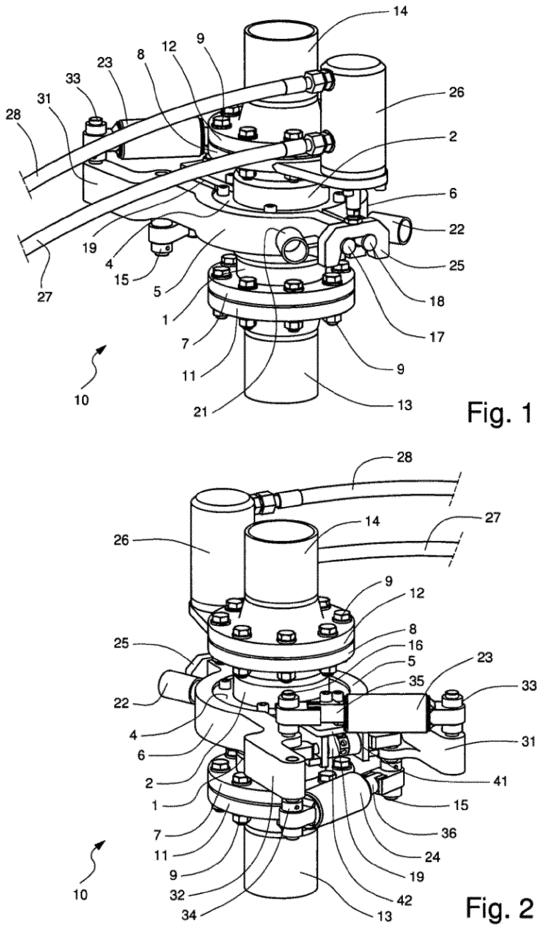

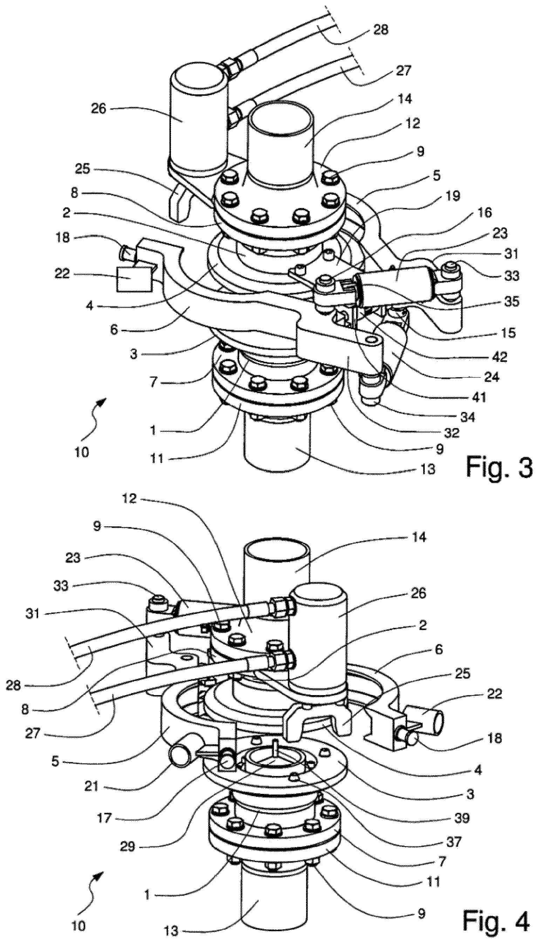

Fig. 1 shows a safety coupling device 10 with two coupling bodies 1, 2, each provided with a first flange 3, 4 (shown in Fig. 3) around which clamp clamping parts 5, 6, and a respective second flange 7, 8 which is coupled with bolts and nuts 9 to a corresponding flange 11, 12 of a conduit part 13, 14. Clamping parts 5, 6 are each provided on their front side with a protrusion 17, 18 and a holder 21, 22 for an operating arm. Clamping parts 5, 6 are each coupled pivotally on their rear side by a first hinge 15, 16 (shown in Fig. 2) via a suspension body 41 (shown in Fig. 2) to a mounting plate 19 which is attached to first flange 4 of upper coupling body 2. In the shown situation clamping parts 5, 6 are clamped round flanges 3, 4 of respective coupling bodies 1, 2 counter to a force provided by compression springs received in spring cylinders 23, 24 (shown in Fig. 2) using operating arms (not shown) inserted into holders 21, 22. Clamping parts 5, 6 are locked by a U-shaped body 25 which can be pulled upward by a hydraulic cylinder 26 in axial direction of conduit parts 13, 14, whereby protrusions 17, 18 are unlocked. The figure also further shows parts 27, 28 of a fluid line for cylinder 26 and a hinge 33 (further described below in Fig. 2) which is coupled to spring cylinder 23 and a lever arm 31.

Fig. 2 shows safety coupling 10 of fig. 1 from the rear with, in addition to the already designated components, a pair of lever arms 31, 32 which extend from the respective first outer ends of clamping parts 5, 6 and which in respective hinges 33, 34 are coupled pivotally in hinges 16, 15 to the first outer ends of clamping parts 6, 5 by cylinder rods 35, 36 coupled to spring cylinders 23, 24. Cylinder rods 35, 36 are in this situation pulled over a maximum length out of respective spring cylinders 23, 24 counter to the force provided by the respective compression springs. Hinges 15, 16 are coupled via a suspension body 41 to mounting plate 19, wherein the mutual distance between hinges 15, 16 can be precisely adjusted using an adjusting mechanism 42.

Fig. 3 shows safety coupling 10 of fig. 1 from the rear in uncoupled state, wherein U-shaped body 25 has been pulled upward by hydraulic cylinder 26, piston rods 15, 16 have been pressed almost wholly into spring cylinders 23, 24 by the respective compression springs and clamping parts 5, 6 have moved away from first flanges 3, 4, as a result of which the two coupling bodies 1, 2 have been uncoupled.

Fig. 4 shows safety coupling 10 of fig. 1 from the front in uncoupled state, wherein a disc valve 29 with an actuator pin 39 is shown in lower coupling body 1. In the shown situation disc valve 29 of lower coupling body 1 is pressed upward by a compression spring (not shown), as a result of which the lower fluid conduit part 13 is closed. The upper fluid conduit part 14 is likewise closed in similar manner. Upon contact between actuator pin 39 of lower disc valve 29 and the corresponding actuator pin of the disc valve (not shown) in upper coupling body 14 in a situation in which first flanges 3, 4 are pressed sealingly against each other, disc valves 29 are opened counter to the force of the respective compression springs, whereby fluid conduit parts 13, 14 are brought into open connection with each other. The figure also shows guide pins 37 in first flange 3 of lower coupling body 1 which correspond to holes (not shown) in first flange 4 of upper coupling body 2.

## Claims

1. Safety coupling device (10) for coupling two fluid conduit parts (13, 14), comprising a pair of co-acting coupling bodies (1, 2) connectable to the respective fluid conduit parts (13, 14), each coupling body (1, 2) being provided with a shut-off valve (29) and a first flange (3, 4), and coupling means for releasable coupling of the coupling bodies (1, 2), **characterized in that** the coupling means are provided by a clamping member assembled from two clamping parts (5, 6) which is to be arranged releasably round the first flanges (3, 4) of the respective coupling bodies (1, 2), wherein the clamping parts (5, 6) are each coupled pivotally at a first outer end by a hinge (15, 16) to a support body (19) and are provided with lever arms (31, 32) extending from the respective hinge (15, 16) and mutually coupled by drive means (23, 24, 35, 36), wherein the clamping parts (5, 6) are provided at a second outer end with locking means (17, 18, 25) for locking the coupling means in a situation in which the clamping member (5, 6) is arranged round the first flanges (3, 4), and actuator means (26) are provided for unlocking the locking means (17, 18, 25) and releasing the clamping member (5, 6) from the situation in which it is arranged round the first flanges (3, 4).

2. Safety coupling device (10) as claimed in claim 1, **characterized in that** the drive means are provided by a pair of compression springs received in spring cylinders (23, 24) and cylinder rods (35, 36) extending therefrom, and the locking means (17, 18, 25) comprise a pair of protrusions (17, 18) extending from the respective second outer ends and a U-shaped body (25) to be arranged round these protrusions (17, 18) which is displaceable in axial direction of the conduit parts (13, 14).

3. safety coupling device (10) as claimed in claim 2, **characterized in that** the actuator means comprise a hydraulic cylinder (26) for displacing the U-shaped body (25).

4. Safety coupling device (10) as claimed in any of the foregoing claims, **characterized in that** the clamping parts (5, 6) are each provided at their respective second outer end with a holder (21, 22) for an operating arm for the clamping parts (5, 6).

5. Safety coupling device (10) as claimed in any of the foregoing claims, **characterized in that** the coupling bodies (1, 2) are each provided with a second flange (7, 8) for coupling the respective coupling body (1, 2) to a flange (11, 12) of a fluid conduit part (13, 14).

6. Safety coupling device (10) as claimed in any of the foregoing claims, **characterized in that** the shut-off valves comprise a pair of ball valves or butterfly valves.

7. Safety coupling device (10) as claimed in any of the claims 1-5, **characterized in that** the shut-off valves comprise a pair of disc valves (29) enclosed under pre-pressure of a compression spring and provided on their side remote from the compression spring with an actuator pin (39), wherein in coupled state of the coupling bodies (1, 2) the respective actuator pins (39) butt against each other and the disc valves (29) are pressed away by the respective actuator pins (39) counter to the pre-pressure of the respective compression springs in order to provide a flow opening through the coupling member (1, 2), and in uncoupled state of the coupling bodies (1, 2) the disc valves (29) are pressed by the respective compression springs onto a valve seat in order to close the respective coupling bodies (1, 2).

8. Safety coupling device (10) as claimed in any of the foregoing claims, **characterized in that** it is provided with measuring and control means for measuring the mutual distance between two predetermined points on respective coupled fluid conduit parts (13, 14) and for controlling the actuator means subject to this distance.

9. Safety coupling device (10) as claimed in claim 8, **characterized in that** the measuring and control means for measuring the mutual distance comprise a breaking cable suspended between the two points and a detector for detecting breaking of this breaking cable.

## Patentansprüche

1. Sicherheitskoppeleinrichtung (10) zur Kopplung von zwei Fluidleitungsteilen (13, 14), umfassend ein Paar zusammenarbeitende mit den respektiven Fluidleitungsteilen (13, 14) koppelbaren Koppelkörper (1, 2), wobei jeder Koppelkörper (1, 2) mit einem Sperrventil (29) und einem ersten Flansch (3, 4), und Koppelmitteln zum lösbaren Koppeln der Koppelkörper (1, 2) ausgestattet ist, **dadurch gekennzeichnet, dass** die Koppelmittel durch ein lösbar um die ersten Flansche (3, 4) der respektiven Koppelkörper (1, 2) anzuordnendes aus zwei Klemmteilen (5, 6) zusammengestelltes Klemmorgan bereitgestellt wurden, wobei die Klemmteile (5, 6) jedes an einem ersten Ende durch ein Scharnier (15, 16) scharnierend mit einem Tragkörper (19) verbunden sind und mit Hebelarmen (31, 32) ausgestattet sind, die sich von dem respektiven Scharnier (15, 16) erstrecken und durch Antriebsmittel (23, 24, 35, 36) gegenseitig gekoppelt sind, wobei die Klemmteile (5, 6) an einem zweiten Ende mit Sicherungsmitteln (17, 18, 25) zum Sichern der Koppelmittel ausgestattet sind, in einem Zustand, in dem das Klemmorgan (5, 6) um die ersten Flansche (3, 4) angeordnet ist, und Aktuatormittel (26) zum Lösen der Sicherungsmittel (17, 18, 25) bereitgestellt sind und zum Freigeben des Klemmorgans (5, 6) aus dem Zustand, in dem dieses um die ersten Flansche (3, 4) angeordnet ist.

2. Sicherheitskoppeleinrichtung (10) gemäß Anspruch 1, **dadurch gekennzeichnet, dass** die Antriebsmittel durch ein Paar in Federzylindern (23, 24) aufgenommene Druckfeder und sich davon erstreckende Zylinderstangen (35, 36) bereitgestellt sind, und die Sicherungsmittel (17, 18, 25) ein Paar sich von den respektiven zweiten Enden erstreckende Vorsprünge (17, 18) und einen um diese Vorsprünge (17, 18) anzuordneten in axialer Richtung der Leitungsteile (13, 14) verschiebbaren U-förmigen Körper (25) umfassen.

3. Sicherheitskoppeleinrichtung (10) gemäß Anspruch 2, **dadurch gekennzeichnet, dass** die Aktuatormittel einen hydraulischen Zylinder (26) für das Verschieben des U-förmigen Körpers (25) umfassen.

4. Sicherheitskoppeleinrichtung (10) gemäß einem der vorhergehenden Ansprüche, **dadurch gekennzeichnet, dass** die Klemmteile (5, 6) an ihrem respektiven zweiten Ende jedes mit einer Halterung (21, 22) für einen Bedienarm für die Klemmteile (5, 6) ausgestattet ist.

5. Sicherheitskoppeleinrichtung (10) gemäß einem der vorhergehenden Ansprüche, **dadurch gekennzeichnet, dass** Koppelkörper (1, 2) jeder mit einem zweiten Flansch (7, 8) zum Koppeln des respektiven Koppelkörpers (1, 2) mit einem Flansch (11, 12) eines Fluidleitungsteils (13, 14) ausgestattet sind.

6. Sicherheitskoppeleinrichtung (10) gemäß einem der vorhergehenden Ansprüche, **dadurch gekennzeichnet, dass** die Sperrventile ein Paar Kugelventile oder Schmetterlingsventile umfassen.

7. Sicherheitskoppeleinrichtung (10) gemäß einem der Ansprüche 1-5, **dadurch gekennzeichnet, dass** die Sperrventile ein Paar mit Vordruck einer Druckfeder beaufschlagte Tellerventile (29) umfassen, die auf ihrer der Druckfeder abgewandten Seite mit einem Bedienungshebel (39) ausgestattet sind, wobei in gekoppeltem Zustand der Koppelkörper (1, 2) die respektiven Bedienungshebel (39) gegeneinander stoßen und die Tellerventile (29) durch die respektiven Bedienungshebel (39) gegen den Vordruck der respektiven Druckfedern zur Bereitstellung einer Durchflussöffnung durch den Koppelkörper (1, 2) weggedrückt sind, und in entkoppeltem Zustand der Koppelkörper (1, 2) die Tellerventile (29) durch die respektiven Druckfedern auf einen Ventilsitz zum Sperren der respektiven Koppelkörper (1, 2) gedrückt sind.

8. Sicherheitskoppeleinrichtung (10) gemäß einem der vorhergehenden Ansprüche, **dadurch gekennzeichnet, dass** diese mit Mess- und Regelmitteln zum Messen des gegenseitigen Abstandes von zwei vorbestimmten Punkten auf respektiven gekoppelten Fluidleitungsteilen (13, 14) und für das in Abhängigkeit dieses Abstandes Regeln der Aktuatormittel.

9. Sicherheitskoppeleinrichtung (10) gemäß Anspruch 8, **dadurch gekennzeichnet, dass** die Mess- und Regelmittel zum Messen des gegenseitigen Abstandes ein zwischen den zwei Punkten gespanntes Bruchkabel und ein Detektor zum Detektieren des Brechens dieses Bruchkabels umfassen.

## Revendications

1. Dispositif de raccord de sécurité (10) pour coupler deux parties de conduite de fluide (13, 14), comprenant une paire de corps de raccord coopérants (1, 2) connectables aux parties de conduite de fluide respectives (13, 14), chaque corps de raccord (1, 2) étant pourvu d'une soupape d'arrêt (29) et d'une première bride (3, 4), et de moyens de couplage pour coupler de façon détachable les corps de raccord (1, 2),
**caractérisé en ce que** les moyens de couplage sont formés par un élément de serrage assemblé à partir de deux parties de serrage (5, 6) qui doit être agencé de façon détachable autour des premières brides (3, 4) des corps de raccord respectifs (1, 2), dans lequel les parties de serrage (5, 6) sont chacune couplées de façon pivotante à une première extrémité extérieure par une charnière (15, 16) à un corps de support (19) et sont pourvues de bras de levier (31, 32) qui s'étendent à partir de la charnière respective (15, 16) et qui sont couplés mutuellement par des moyens d'entraînement (23, 24, 35, 36),
dans lequel les parties de serrage (5, 6) sont pourvues à une seconde extrémité extérieure de moyens de verrouillage (17, 18, 25) pour verrouiller les moyens de couplage dans une situation dans laquelle l'élément de serrage (5, 6) est agencé autour des première brides (3, 4), et des moyens d'actionneur (26) sont prévus pour déverrouiller les moyens de verrouillage (17, 18, 25) et libérer l'élément de serrage (5, 6) de la situation dans laquelle il est agencé autour des premières brides (3, 4).

2. Dispositif de raccord de sécurité (10) selon la revendication 1, **caractérisé en ce que** les moyens d'entraînement sont formés par une paire de ressorts de compression reçus dans des cylindres à ressort (23, 24) et des tiges de cylindre (35, 36) qui s'étendent à partir de ceux-ci, et les moyens de verrouillage (17, 18, 25) comprennent une paire de saillies (17, 18) qui s'étendent à partir des secondes extrémités extérieures respectives et un corps en forme de U (25) à agencer autour de ces saillies (17, 18) et qui est déplaçable dans une direction axiale des parties de conduite (13, 14) .

3. Dispositif de raccord de sécurité (10) selon la revendication 2, **caractérisé en ce que** les moyens d'actionneur comprennent un cylindre hydraulique (26) pour déplacer le corps en forme de U (25).

4. Dispositif de raccord de sécurité (10) selon l'une quelconque des revendications précédentes, **caractérisé en ce que** les parties de serrage (5, 6) sont chacune pourvues à leurs secondes extrémités extérieures respectives d'un support (21, 22) pour un bras de commande pour les parties de serrage (5, 6).

5. Dispositif de raccord de sécurité (10) selon l'une quelconque des revendications précédentes, **caractérisé en ce que** les corps de raccord (1, 2) sont chacun pourvus d'une seconde bride (7, 8) pour coupler le corps de raccord respectif (1, 2) à une bride (11, 12) d'une partie de conduite de fluide (13, 14).

6. Dispositif de raccord de sécurité (10) selon l'une quelconque des revendications précédentes, **caractérisé en ce que** les soupapes d'arrêt comprennent une paire de soupapes à bille ou de soupapes papillon.

7. Dispositif de raccord de sécurité (10) selon l'une quelconque des revendications 1 à 5, **caractérisé en ce que** les soupapes d'arrêt comprennent une paire de soupapes à disque (29) maintenues sous une pré-pression d'un ressort de compression et pourvues sur leur côté distant du ressort de compression d'une broche d'actionnement (39), dans lequel, à l'état couplé des corps de raccord (1, 2), les broches d'actionnement respectives (39) butent l'une contre l'autre et les soupapes à disque (29) sont poussées à s'écarter par les broches d'actionnement respectives (39) pour s'opposer à la pré-pression des ressorts de compression respectifs dans le but de former une ouverture d'écoulement à travers l'élément de couplage (1, 2) et, dans état découplé des corps de raccord (1, 2), les soupapes à disque (29) sont pressées par les ressorts de compression respectifs sur un siège de soupape dans le but de fermer les corps de raccord respectifs (1, 2) .

8. Dispositif de raccord de sécurité (10) selon l'une quelconque des revendications précédentes, **caractérisé en ce qu'**il est pourvu de moyens de mesure et de commande pour mesurer la distance mutuelle entre deux points prédéterminés sur des parties de conduite de fluide couplées respectives (13, 14) et pour commander les moyens d'actionneur en fonction de cette distance.

9. Dispositif de raccord de sécurité (10) selon la revendication 8, **caractérisé en ce que** les moyens de mesure et de commande pour mesurer la distance mutuelle comprennent un câble de rupture qui est suspendu entre les deux points et un détecteur pour détecter la rupture de ce câble de rupture.
